# EUROPEAN PATENT SPECIFICATION

(11) **EP 0 602 560 B1**
(45) Date of publication and mention of the grant of the patent: **12.08.1998**
(21) Application number: 93119930.1
(22) Date of filing: 10.12.1993
(51) Int. Cl.: B01D 63/08, B01D 69/10, B01D 65/00

(54) **Filtration membrane cartridge**
Modul mit Filtrationsmembranen
Cartouche à membrane filtrante

(30) Priority: 16.12.1992 JP 334791/92; 21.01.1993 JP 8000/93; 16.07.1993 JP 176317/93; 16.07.1993 JP 176318/93
(43) Date of publication of application: 22.06.1994
(73) Proprietor: Kubota Corporation, Naniwa-ku, Osaka (JP)
(72) Inventor: Shimizu, Kenji, c/o Kubota Co., Naniwa-ku, Osaka (JP); Ishida, Hiroshi, c/o Kubota Co., Naniwa-ku, Osaka (JP); Yamada, Yutaka, c/o Kubota Co., Naniwa-ku, Osaka (JP); Izumi, Kiyoshi, c/o Kubota Co., Naniwa-ku, Osaka (JP); Moro, Masashi, c/o Kubota Co., Naniwa-ku, Osaka (JP); Soeda, Yuji, c/o Kubota Co., Naniwa-ku, Osaka (JP)
(74) Representative: Le Vrang, Klaus

(56) References cited:
- EP-A- 0 457 676
- DE-A- 2 303 860
- DE-A- 3 726 865
- DE-A- 3 728 825
- FR-A- 2 478 483

## Description

### FIELD OF THE INVENTION

The present invention relates to a filtration membrane cartridge used for solid liquid separation. More particularly, the invention relates to a filtration membrane cartridge which is the most essential part of a membrane separation device.

### BACKGROUND OF THE INVENTION

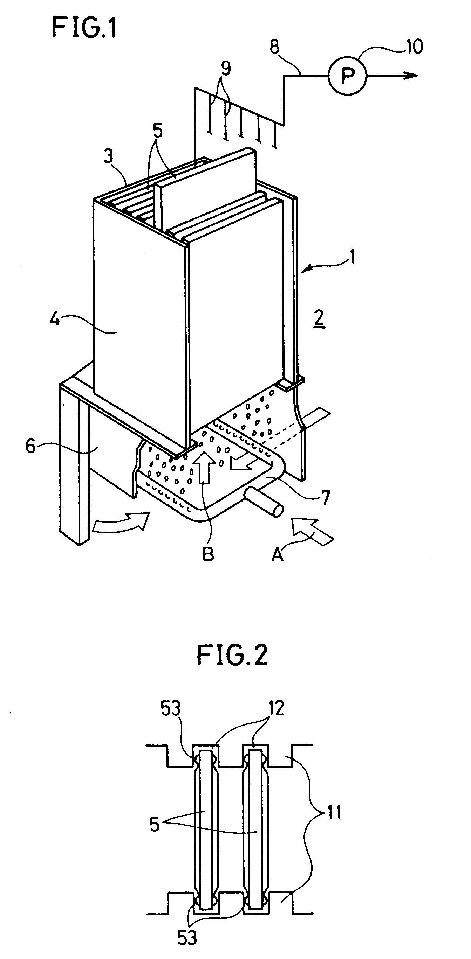

As shown in Fig. 1, a typical conventional membrane separation device is provided with a filtering membrane unit 3 which is disposed by way of being submerged in raw liquid pooled in a raw liquid processing tank. The conventional filtering membrane unit 3 incorporates a plurality of filtration membrane cartridges 5 inside of an upper casing 4 by vertically aligning them in parallel with each other at predetermined intervals. In addition, a gas supply unit 7 is disposed inside of a lower casing 6 in order to feed gas such as oxygen, air, or nitrogen gas, to raw liquid in accordance with objective uses. Each of the filtration membrane cartridges 5 stored in the filtering membrane unit 3 is internally provided with a permeated-liquid passage connected to a routed tube 9 of a suction tube 8 for sucking permeated liquid where an end of the suction tube 8 is linked with a suction pump 10.

While operating the conventional membrane separation device 1, the suction pump 10 generates negative pressure against all the filtration membrane cartridges 5 stored in the filtering membrane unit 3 in order that permeated liquid can properly be sucked. On the other hand, gas such as oxygen or air (designated by arrowed mark A) is supplied to the gas supply unit 7 from an external source to enable the gas supply unit 7 to jet out bubble flow into space between adjoining filtration membrane cartridges 5 in the upward direction from the bottom of the filtering-membrane unit 3. Upwardly flowing bubble generates aerial lifting action to cause tangential flow along the membrane surface, said tangential flow sweeping away deposit on the membrane surface.

Conventionally, each filtration membrane cartridge 5 stored in the membrane separation device 1 is inserted in a gutter provided inside of each slit plate vertically set in the upper casing 4. However, since each filtration membrane cartridge 5 and the inner surface of each gutter remain in contact with each other via substantial surface area, friction is generated between both surfaces to check operator to smoothly insert and take out each of the cartridges 5 into and from the gutter.

Normally, any conventional filtration membrane cartridge 5 is based on the structure in which an organic filtering membrane is secured onto the surface of a plane rectangular membrane-supporting plate by bonding peripheral *areas* of the organic filtering membrane to the membrane-supporting plate. On the other hand, when securing the filtering membrane to the membrane-supporting plate with adhesive agent, adhesive strength is variable according to strength, durability, and chemical resistance property of the selected adhesive agent, and therefore, filtering membrane may incidentally be stripped off from the membrane-supporting plate.

### PRIOR ART

*The DE-A 3 728 825 describes a filtration membrane according to the preamble portion of the main claim, comprising a plurality of filtering membranes disposed on both sides of a resin membrane-supporting plate. The filtering membranes are individually connected with the plate at edges of the filtering membrane. The membrane itself is connected with the supporting plate the edges there of and possibly at additional spot-like bonding areas.*

*The EP-A 0 457 676 refers to a method of producing a filter unit. Two thermoplastic films are connected together reinforced by ribs for adapting the pressure exerted on the membranes. Such ribs will reduce the effective filtering surface. The ribs do not contribute to the bonding between the membrane and its carrier.*

### DISCLOSURE OF THE INVENTION

*It is an object of the invention to enhance a filtration membrane cartridge as shown in the prior art in order to improve the flow of liquid for better filtering properties.*

*To solve this problem, the membrane supporting plate has channels for permeated liquid which are open at the surface of the membrane-supporting plate that faces the corresponding filtering membrane.*

*According to the above-referred structure for embodying the invention, even when the filtering membrane is closely pressed against the corresponding membrane-supporting plate by effect of negative pressure caused by a liquid sucking operation, permeated liquid can* *securely flow through a plurality of channels constantly open to the surface of the membrane-supporting plate to enable liquid permeated to swiftly flow through the filtration system.*

*Furthermore,* the improved filtration membrane cartridge according to the invention disposes each filtering membrane on both surfaces of a membrane-supporting plate made of resin, and secures edges of the filtering membranes to the membrane-supporting plate by way of fusing both of them for adhesion therebetween.

According to the above structure for embodying the invention, each of the accommodated filtering membranes can solidly be secured to the corresponding membrane-supporting plate by way of melting both the filtering membranes and the corresponding membrane-supporting plate or either of them via a thermal fusion or irradiation of ultrasonic waves.

According to the invention, each filtering membrane is bonded to the corresponding membrane-supporting plate via a fusing process applied onto the main fusible *area* which is peripherally and linearly formed along the periphery of the filtering membrane, and subordinate fusible *areas* which are intermittently formed in plural locations along one side or both sides of the main fusible *areas*.

According to the above-referred structure for embodying the invention, substantial bonding strength between the filtering membrane and the corresponding membrane-supporting plate is secured by the main fusible *area.* Furthermore, bonding strength is reinforced by the effect of local fusion applied onto the plural subordinate fusible *areas.*

*According to an embodiment* of the filtration membrane cartridge for embodying the invention, a pair of spacers are inserted between the filtering membranes and the corresponding membrane-supporting plate.

According to *another embodiment* of the invention, in resistance against negative pressure, each spacer supports the corresponding filtering membrane by providing predetermined space on the corresponding membrane-supporting plate to enable liquid filtered out of the filtering membrane to swiftly flow through the predetermined space.

The invention provides an improved filtration-membrane cartridge. Each of a predetermined number of the inventive filtration-membrane cartridges is inserted in the corresponding gutter of a slit plate provided inside of the filtering-membrane unit. In particular, there may be provided a plurality of projections on peripheral edges (being opposite from the inner surface of the gutter of the slit plate) of the filtration membrane cartridge to enable these projections to slide themselves to come into contact with the inner surface of the gutter provided in the slit plate.

Whenever inserting the filtration membrane cartridge into the corresponding gutter and removing it therefrom, the filtration membrane cartridge is slidably brought into contact with the inner surface of the corresponding gutter of the slit plate by effect of plural projections set to peripheral edges of the filtration membrane cartridge. This in turn contracts contact area of the cartridge against the gutter to reduce frictional force to facilitate operator to easily insert and remove the filtration membrane cartridge into and from the filtering membrane unit.

### BRIEF DESCRIPTION OF THE DRAWINGS

Fig. 1 is an overall perspective view of a conventional membrane separation device;
Fig. 2 is a plan designating a structure for retaining the filtration membrane cartridge in position;
Fig. 3 is a front view of the filtration membrane cartridge according to an embodiment of the invention;
Fig. 4 is a lateral view of the filtration membrane cartridge of Fig. 3;
Fig. 5 is a cross-sectional view of the filtration membrane cartridge across arrowed line A - A shown in Fig. 3;
Fig. 6 is a cross-sectional view of the filtration membrane cartridge across arrowed line B - B shown in Fig. 5;
Fig. 7 is a schematic pattern of the groove formed in the membrane-supporting plate according to an embodiment of the invention;
Fig. 8 is another schematic pattern of the groove formed in the membrane-supporting plate according to another embodiment of the invention;
Fig. 9 is a partially enlarged cross-sectional view of the filtration membrane cartridge according to the invention;
Fig. 10 is a cross-sectional view designating another example of the disposition of the filtering membrane against the corresponding membrane-supporting plate;
Fig. 11 is a front view designating another structure of grooves formed in the membrane-supporting plate;
Fig. 12 is a cross-sectional view of the membrane-supporting plate across arrowed line C - C shown in Fig. 11;
Fig. 13 is a cross-sectional view of the membrane-supporting plate across arrowed line D - D shown in Fig. 11;
Fig. 14 is a cross-sectional view of the membrane-supporting plate across arrowed line E - E shown in Fig. 11;
Fig. 15 is explanatory of a method of bonding a filtering membrane to the corresponding membrane-supporting plate;
Fig. 16 is a schematic pattern designating a structure of fused *areas* in the filtration membrane cartridge according to the invention;
Fig. 17 is a schematic pattern designating another structure of the fused *areas* in the filtration membrane cartridge according to the invention;
Fig. 18 is a schematic pattern designating other structures of the fused *areas* in the filtration membrane cartridge according to the invention; and
Fig. 19 is explanatory of another method of bonding a filtering membrane to the corresponding membrane-supporting plate.

### DESCRIPTION OF THE PREFERRED EMBODIMENTS

Referring now to the accompanying drawings, full details of the improved filtration membrane cartridge according to an embodiment of the invention are described below. Those essential components having a function identical to that of the corresponding components shown in Fig. 1 are designated by identical reference numerals, and thus, description of these is deleted.

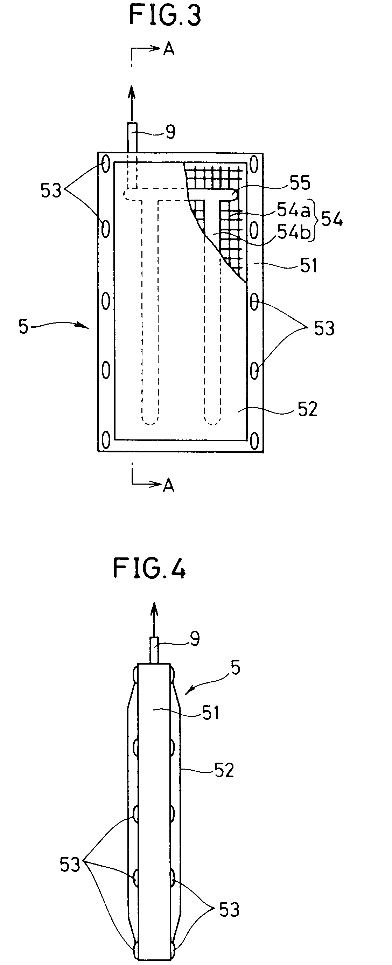

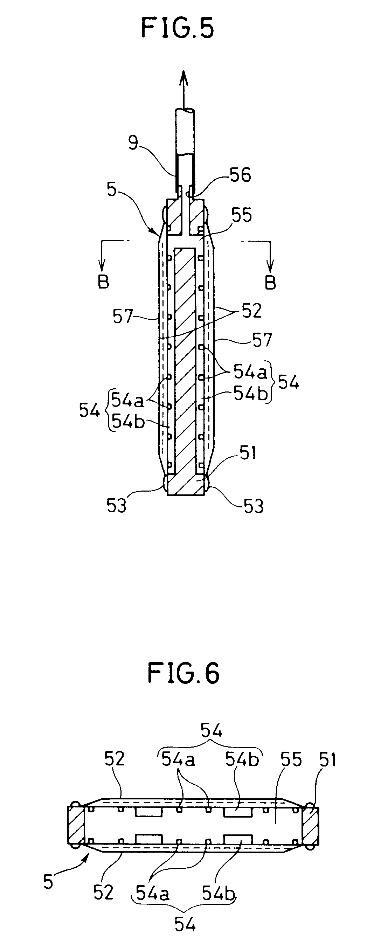

Refer now to Figures 1 through 9, in which a plurality of filtration membrane cartridges 5 are retained by a plurality of corresponding slit plates 11 which are accommodated in an upper casing 4 of a filtration membrane assembly unit 3. More particularly, as shown in Fig. 1, a plurality of gutter 12 are formed in each slit plate 11 at predetermined intervals. A plurality of filtration membrane cartridges 5 are vertically inserted in the corresponding gutter 12 in parallel with each other.

Each of the filtration membrane cartridges 5 has a structure comprising a pair of filtering membranes 52 each consisting of an organic membrane such as an ultrafiltration membrane or microfiltration membrane, which are disposed on both surfaces of the plane rectangular membrane-supporting plate 51 made from resin such as PVC for example. A pair of filtering membranes 52 are peripherally secured to the corresponding membrane-supporting plate 51 by applying a fusing process.

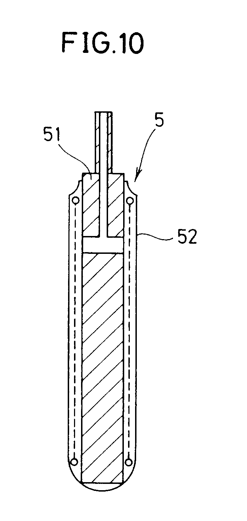

Although the present embodiment has disposed the filtering membranes 52 on both surfaces of the corresponding membrane-supporting plate 51, alternatively, as shown in Fig. 10, a single sack-like filtering membrane 52 may also be disposed by way of fully covering the membrane-supporting plate 51. The novel method of bonding the filtering membranes 52 to the corresponding membrane-supporting plate 51 will be described later on.

A channel for permeated liquid further inside of the filtering membranes 52 is linked with a branch tube 9 routed from a suction tube 8 for sucking permeated liquid at one side of the membrane-supporting plate 51 in the filtration membrane cartridge 5. Raw liquid is filtered by these filtration membrane cartridges 5 by effect of negative pressure generated by a suction pump 10 via a liquid suction tube 8.

A plurality of projections 53 are disposed on peripheral edges of the membrane-supporting plate 51 at predetermined intervals, more particularly, on a pair of parallel sides opposite from respective gutter 12 of respective slit plates 11. Those plural filtration membrane cartridges 5 are secured to the filtering-membrane unit 3 by slidably bringing those projections 53 into contact with inner surface of the corresponding gutter 12.

Each of these projections 53 is elliptically shaped in the vertical direction of the filtration membrane cartridge 5. For example, in order to manufacture the filtration membrane cartridges 5 having 1000 mm of length and 500 mm of width, the filtration membrane cartridge 5 is essentially provided with a number of projections 53 each having 5 mm of long diameter, 1 to 2 mm of short diameter, and 0.5 mm of height, by a certain number ranging from 6 to 20 units per surface of the filtration membrane cartridge 5.

Since those projections 53 and the inner surface of the gutter 12 come into contact with each other via confined contactable area to cause minimal friction to occur, operator can readily insert and take out each filtration membrane cartridge 5 into and from the corresponding gutter 12 of the slit plate 11.

Even though distortion ever occurs in the filtration membrane cartridge 5 or in the slit plate 11, or if the filtration membrane cartridge 5 could not easily be inserted or drawn out as a result of inadequate width of the corresponding gutter 12 provided in the slit plate 11, the filtration membrane cartridge 5 can properly fit in with the gutter 12 merely by scraping off those projections 53.

The membrane-supporting plate 51 of the filtration membrane cartridge 5 incorporates a channel 54 for permeated liquid flowing out of the filtering membranes 52. The channel 54 comprises fine meshy grooves 54a or a plurality of slits 54b or grooves 54a and slits 54b by way of combining them. To implement the present embodiment, the fine meshy grooves 54a are combined with the slits 54b for example. This method is described below.

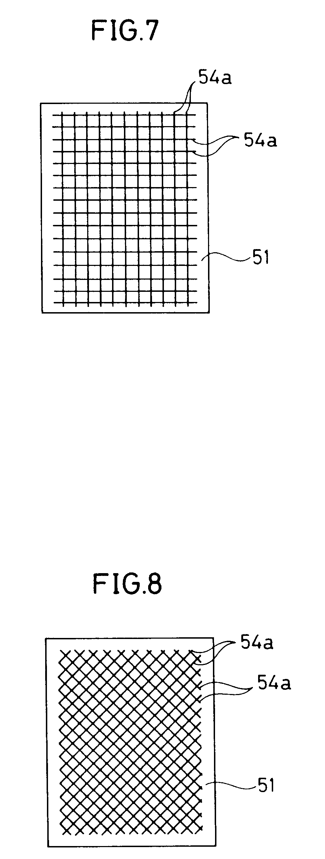

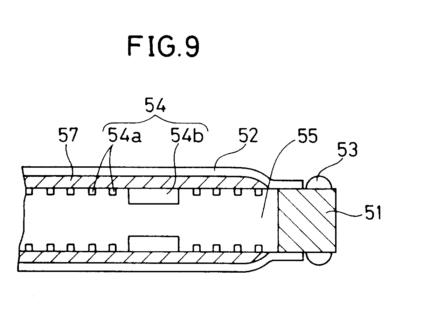

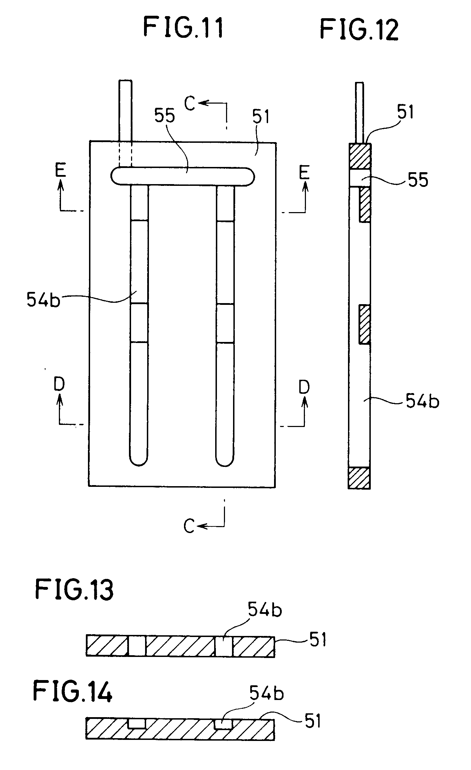

The fine meshy grooves 54a are formed on both-side surfaces of the membrane-supporting plate 51. Structurally, a plurality of fine linear grooves 54a are linked with each other in mesh form. These grooves 54a are formed by applying an etching process against a metal mold used for molding the membrane-supporting plate 51. These fine linear grooves 54a are linked with peripheral edges of apertures of the slits 54b. As shown in Figures 7 and 8, these fine linear grooves 54a may be disposed in parallel with or at an oblique angle against the horizontal and vertical sides of the rectangular membrane-supporting plate 51. Although the present embodiment uses the fine meshy grooves 54a, when being combined with the slits 54b, these fine meshy grooves 54a may be arranged in striped pattern. Each of these fine meshy grooves 54a has less than 1 mm of depth, less than 1 mm of width, and less than 5 mm of intervals between adjoining grooves 54a. On the other hand, those slits 54b each having an appropriate depth are respectively open to the surface of the membrane-supporting plate 51 and disposed in parallel with vertical sides of the membrane-supporting plate 51. As shown in Figures 11 through 14, those slits 54b may be formed by way of extending themselves in the direction of the thickness of the membrane-supporting plate 51. A sump of permeated liquid 55 is formed at a location close to an end and along widthwise direction of the membrane-supporting plate 51. The sump 55 is linked with the fine meshy grooves 54a and the slits 54b at peripheral edges of apertures on the surface of the membrane-supporting plate 51. A suction port 56 is formed at the upper end of the membrane-supporting plate 51 so that it can be linked with the sump 55. The branch tube 9 routed from the suction tube 8 is connected to the suction port 56.

When activating the suction pump 10 to apply negative pressure to the filtration membrane cartridge 5 via the suction tube 8, permeated liquid is sucked into the filtration membrane cartridge 5, and then permeated liquid out of the filtering membranes 52 flows into the sump 55 via those fine meshy grooves 54a and those slits 54b formed inside of the membrane supporting plate 51 to flow into the branch tube 9 of the suction tube 8 from the suction port 56.

While the above processes are underway, even though the filtering membranes 52 closely adhere to the membrane-supporting plate 51 by effect of negative pressure, since flow of permeated liquid on the surface of the membrane-supporting plate 51 can be secured by means of the fine meshy grooves 54a and the slits 54b, permeated liquid can easily flow through the space between the filtering membranes 52 and the membrane-supporting plate 51. Especially, where slits 54b are formed, the distance of the flow of permeated liquid in the fine meshy grooves 54a shortens, facilitating smoother flow of the liquid.

A pair of spacers 57 are provided between the membrane-supporting plate 51 and the filtering membranes 52. Each of these spacers 57 provides predetermined interspace between the membrane-supporting plate 51 and the filtering membranes 52 to facilitate permeated liquid to smoothly flow therethrough. Each of these spacers 57 is composed of a felt-like sheet or a plastic net or a metallic net. Each of the filtering membranes 52 has configuration greater than that of the spacer 57 enough to fully cover the spacer 57, and therefore, these spacers 57 are prevented from coming into direct contact with the raw liquid.

According to the structure described above, since the spacers 57 respectively support the filtering membranes 52 by way of resisting negative pressure caused by permeated liquid suction operation by means of predetermined space formed on the membrane-supporting plate 51, and therefore, permeated liquid out of the filtering membranes 52 can swiftly flow through the predetermined space.

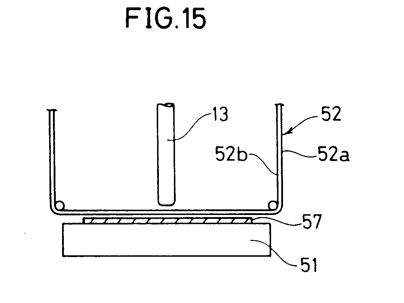

Next, the method of fusibly bonding the filtering membranes 52 to the membrane-supporting plate 51 is described below. As shown in Fig. 15, the membrane-supporting plate 51, the filtering membranes 52, and the spacers 57, are superposed in sequence. In the present embodiment, the filtering membranes 52 comprises a thermoplastic non-woven cloth 52a made from saturated polyester resin functioning as the supporting body and a membrane as a surface layer 52b integrated with each other. Those spacers 57 are not always essential for embodying the filtration membrane cartridge related to the invention.

Alter superposing those components mentioned above, a horn 13 is set to a predetermined position above the filtering membranes 52 in order to oscillate ultrasonic wave. Either a rotary horn 13 or a stationary horn 13 is usable, where the rotary horn 13 is specifically used when processing compactly composed filtering membranes 52. On the way of moving over the filtering membranes 52, the horn 13 oscillates ultrasonic wave to fusibly bond the filtering membranes 52 to the membrane-supporting plate 51.

As mentioned above, since the non-woven cloth 52a functioning as the substrate for supporting the filtering membranes 52 is made from saturated polyester resin, the non-woven cloth 52a is subject to melting at a temperature above 140° C. for example. On the other hand, the membrane-supporting plate 51 is subject to melting at a temperature lower than the melting point of the non-woven cloth 52a in that the membrane-supporting plate 51 is made from ABS resin or the like. Therefore, when applying temperature lower than about 140° C., the membrane-supporting plate is melted to cause the molten resinous component to infiltrate into the non-woven cloth 52a, thus causing the filtering membranes 52 to be bonded to the membrane-supporting plate 51.

On exposure to temperature higher than about 140° C., both the membrane-supporting plate 51 and the non-woven cloth 52a are subject to fusion with each other.

Even when thermally treating the filtering membranes 52 devoid of the non-woven cloth 52a, the filtering membranes 52 can securely be fused with the membrane-supporting plate 51 by means of molten resinous component of the membrane-supporting plate 51 or by effect of the simultaneous fusion of the resinous component of the membrane-supporting plate 51 and the filtering membranes 52.

On the way of executing the thermal fusion process by applying ultrasonic wave, objective resinous component is apt to melt from the inner *area*, and thus, it is desired that the horn 13 be activated via a thermally resistant tape disposed on the filtering membranes 52. Instead of the above fusing method using ultrasonic wave, local thermal treatment can also be performed for locally fusing the filtering membranes 52 with the membrane-supporting plate 51.

As described above, the filtering membranes 52 can solidly be bonded to the membrane-supporting plate 51 by causing the plastic membrane-supporting plate 51 and the filtering membranes 52 incorporating plastic substrate or either of these to be fused with each other via a thermal treatment or irradiation of ultrasonic wave.

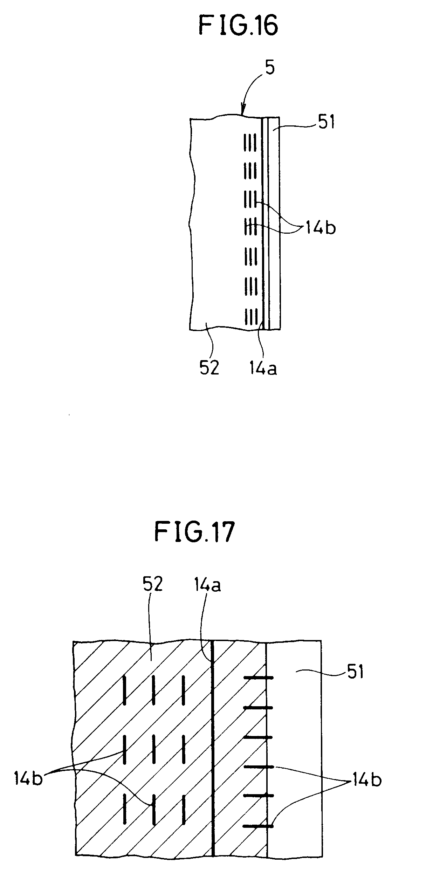

As shown in Figures 16 and 17, the membrane-supporting plate 51 and the filtering membranes 52 are fused with each other via the main fusible *area* 14a peripherally and linearly provided along peripheral edges of the filtering membranes and the subordinate fusible *areas* 14b intermittently provided on a single side or on both sides of the main fusible *area* 14a.

The main fusible *area* 14a is provided in order to secure water-sealing effect and fundamental bonding strength. On the other hand, the subordinate fusible *areas* 14b are intermittently provided in plural positions in order to prevent the filtering membranes 52 from being wrinkled, and yet, the subordinate fusible *areas* 14b respectively reinforce the bonding strength between the membrane-supporting plate 51 and the filtering membranes 52. Considering economy of thermal energy and better effect of fusion, it is desired that the main fusible *area* 14a be formed with narrow width.

By effect of providing the subordinate fusible *areas* 14b on the outer side of the main fusible *area* 14a, unfused portion of the filtering membranes 52 is protected so that the filtering membranes 52 can fully be prevented from being stripped off from the membrane-supporting plate 51.

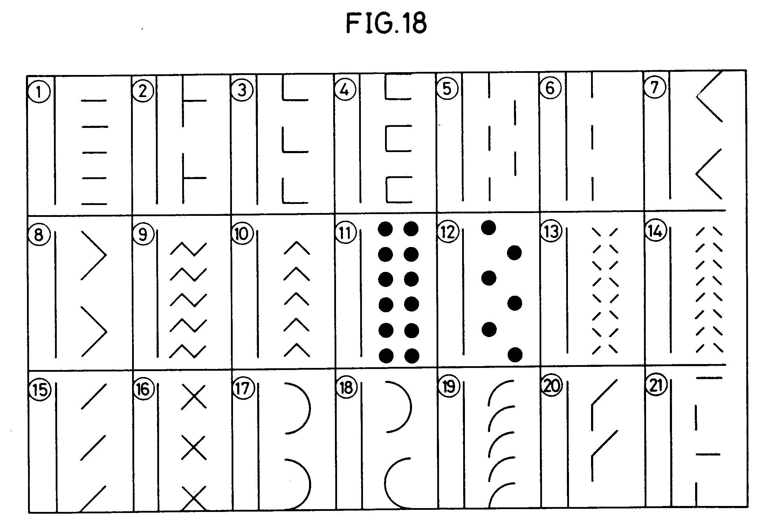

Nevertheless, in the event that there is no fear of causing the filtering membranes 52 to be stripped off along the peripheral edges, it is possible for the embodiment to confine provision of the subordinate fusible *areas* 14b solely to the central part of the filtering membranes 52. As shown in Fig. 18, not only the intermittent and linear formation, but the subordinate fusible *areas* 14b may also be provided in a variety of patterns such as the one being disposed at predetermined intervals for example.

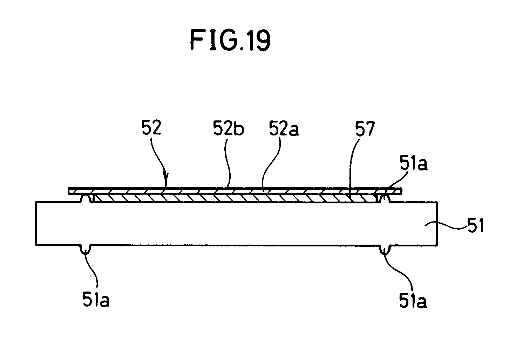

As shown in Fig. 19 for example, prior to the execution of a fusion process between the membrane-supporting plate 51 and the filtering membranes 52, a plurality of projected fusible *areas* 51a may integrally be formed on the membrane-supporting plate 51. When implementing this method, initially, each of the filtering membranes 52 is disposed by way of fully concealing the projected fusible *areas* 51a, and then, the fusible *areas* 51a are melted via a thermal treatment or irradiation of ultra-sonic wave before executing a compressive fusing process to fuse the membrane-supporting plate 51 with the filtering membranes 52 at locally melted regions.

As a result of the provision of the above structure, the filtering membranes 52 can securely be bonded to the membrane-supporting plate 51 by way of preventing the main component of the membrane-supporting plate 51 from being melted, and yet, by way of preventing deformation in the periphery of melted regions and subsequent deformation of the filtering membranes 52 from occurrence. The above projected fusible *areas* 51a may also be formed using members having any shape other than that of the membrane-supporting plate 51, like bar-shaped members for example.

## Claims

1. A filtration membrane cartridge comprising:
- a plurality of filtering membranes (52) disposed on both surfaces of a resin membrane-supporting plate (51)
- said filtering membranes being individually connected with said membrane-supporting plate at edges of said filtering membranes,
- the filtering membranes (52) comprising a nonwoven fabric support member (52a) on the side thereof abutting on the membrane supporting plate (51), the surface of said support member being integrated with a membrane to form the filtering membrane,
- each filtering membrane (52) being connected to said membrane-supporting plate (51) by a peripheral, main fusible area (14a), which defines a sealed border, and a plurality of subordinate fusible areas (14b),
- said plurality of fusible areas (14b) being formed in discrete, repeating patterns placed intermittently in a line,
characterized in that
- said main fusible area (14a) being formed peripherally in a continuous line adjacent to but spaced from the peripheral edges of each of the filtering membranes,
- said membrane-supporting plate (51) having a plurality of channels (54) for permeated liquid formed on the surface of the membrane-supporting plate (51) facing the filtering membranes (52),
- said channels comprising interconnecting linear grooves (54a),
- said plurality of subordinate fusible areas (14b) extending and being disposed adjacent to the main fusible area (14a), the resin of the resin membrane-supporting plate (51) and the nonwoven fabric of the filtering membrane (52) being fused together so that the filtering membrane (52) is bonded to the membrane supporting plate (51).

2. A membrane cartridge according to claim 1, characterized in that said line of subordinate fusible areas (14b) is formed between said main fusible area (14a) and the peripheral edges of the filtering membrane.

3. A membrane cartridge according to claim 1, characterized in that said line of subordinate fusible areas is formed alongside the main fusible area (14a) on the side opposite to that of the peripheral edges of the filtering membrane.

4. A membrane cartridge according to claim 3, characterized in that said subordinate fusible areas (14b) are also formed in second discrete, repeating patterns placed intermittently in a line between said main fusible area (14a) and the peripheral edges of the filtering membrane.

## Patentansprüche

1. Modul für Filtrationsmembranen, enthaltend:
- eine Vielzahl Filtermembranen (52), welche an beiden Seiten einer Kunstharz-Membranhalteplatte (51) angeordnet sind,
- jede dieser Filtermembranen ist für sich an ihren Rändern mit der Membranhalteplatte verbunden,
- die Filtermembranen (52) umfassen an ihrer Seite ein an der Membranhalteplatte (51) anliegendes Vliesstoff-Stützteil (52a); die Oberfläche des Stützteils ist Bestandteil einer die Filtermembrane bildenden Membrane,
- jede Filtermembrane (52) ist mit der Membranhalteplatte (51) am Umfang durch eine Hauptsehmelzzone (14a) verbunden, welche eine abgedichtete Umrandung und eine Vielzahl von Nebenschmelzzonen (14b) festlegt,
- die Vielzahl von Schweißzonen (14b) bilden getrennte, wiederkehrende und intermittierend in einer Linie angeordnete Muster,
gekennzeichnet durch folgende Merkmale:
- die Hauptsehmelzzone (14a) ist in einer durchgehenden Linie angrenzend an den Umfang aber im Abstand von den Randbereiehen jeder Filtermembrane ausgebildet,
- die Membranhalteplatte (51) hat für durchgedrungene Flüssigkeit eine Vielzahl Kanäle (54), welche an der Oberfläche der Membranhalteplatte (51) gegenüberliegend der Filtermembran (52) ausgebildet sind,
- die Kanäle umfassen miteinander verbundene, geradlinige Rinnen (54a),
- die Vielzahl der Nebenschmelzzonen (14b) erstrecken sich angrenzend an die Hauptschmelzzonen (14a); das Kunstharz der Kunstharz-Membranhalteplatte (51) und der Vliesstoff der Filtermembrane (52) sind miteinander verschmolzen, so daß die Filtermembrane (52) mit der Membranhalteplatte (51) verbunden ist.

2. Modul mit Filtrationsmembranen nach Anspruch 1, dadurch gekennzeichnet, daß die Linie der Nebenschmelzzone (14b) zwischen der Hauptsehmelzzone (14a) und den umlaufenden Rändern der Filtermembrane ausgebildet ist.

3. Modul mit Filtrationsmembranen nach Anspruch 1, dadurch gekennzeichnet, daß die Linie der Nebenschmelzzonen (14b) längsseits der Hauptsehmelzzone (14a) auf der Seite gegenüberliegend den umlaufenden Rändern der Filtermembrane ausgebildet ist.

4. Modul mit Filtrationsmembranen nach Anspruch 3, dadurch gekennzeichnet, daß die Nebenschmelzzonen (14b) auch einzeln aufeinanderfolgende, sich wiederholende Muster bilden, welche intermittierend in einer Linie zwischen der Hauptschmelzzone (14a) und den umlaufenden Rändern der Filtermembrane angeordnet sind.

## Revendications

1. Cartouche formant membrane de filtration comportant :
- plusieurs membranes filtrantes (52) agencées sur les deux surfaces d'une plaque de support de membrane en résine (51),
- lesdites membranes filtrantes étant reliées individuellement à ladite plaque de support de membrane au niveau des bords desdites membranes filtrantes,
- les membranes filtrantes (52) comportant un élément de support (52a) en tissu non-tissé sur le côté de celles-ci venant en butée avec la plaque de support de membrane (51), la surface dudit élément de support étant formée en un seul bloc avec une membrane pour former la membrane filtrante,
- chaque membrane filtrante (52) étant reliée à ladite plaque de support de membrane (51) par une zone fusible principale périphérique (14a), qui définit une bordure étanche, et plusieurs zones fusibles subordonnées (14b),
- lesdites plusieurs zones fusibles (14b) étant formées selon des motifs répétés distincts placés de manière intermittente dans une ligne,
caractérisée en ce que
- ladite zone fusible principale (14a) est formée de manière périphérique en ligne continue adjacente aux bords périphériques de chaque membrane filtrante mais espacée de ceux-ci,
- ladite plaque de support de membrane (51) comporte plusieurs canaux (54) destinés au liquide ayant traversé, formés sur la surface de la plaque de support de membrane (51) située en vis-à-vis des membranes filtrantes (52),
- lesdits canaux comportent des gorges linéaires reliées mutuellement (54a),
- lesdites plusieurs zones fusibles subordonnées (14b) s'étendent et sont agencées adjacentes à la zone fusible principale (14a), la résine de la plaque de support de membrane en résine (51) et le tissu non-tissé de la membrane filtrante (52) étant fusionnés ensemble de sorte que la membrane filtrante (52) est fixée sur la plaque de support de membrane (51).

2. Cartouche formant membrane selon la revendication 1, caractérisée en ce que ladite ligne de zones fusibles subordonnées (14b) est formée entre ladite zone fusible principale (14a) et les bords périphériques de la membrane filtrante.

3. Cartouche formant membrane selon la revendication 1, caractérisée en ce que ladite ligne de zones fusibles subordonnées est formée le long de la zone fusible principale (14a) sur le côté opposé à celui des bords périphériques de la membrane filtrante.

4. Cartouche formant membrane selon la revendication 3, caractérisée en ce que lesdites zones fusibles subordonnées (14b) sont aussi formées selon des seconds motifs répétés distincts placés de manière intermittente dans une ligne située entre ladite zone fusible principale (14a) et les bords périphériques de la membrane filtrante.
